# EUROPEAN PATENT SPECIFICATION

(11) **EP 1 209 075 B1**
(45) Date of publication and mention of the grant of the patent: **16.08.2006**
(21) Application number: 01125335.8
(22) Date of filing: 26.10.2001
(51) Int. Cl.: B64C 1/38, F42B 10/46, F42B 15/34

(54) **Optical window assembly for use in a supersonic platform**
Optische Fensteranordnung für Ultraschall-Plattform
Fenêtre optique pour plateforme ultrasonique

(30) Priority: 26.10.2000 IL 13930400
(43) Date of publication of application: 29.05.2002
(73) Proprietor: RAFAEL - ARMAMENT DEVELOPMENT AUTHORITY LTD., Haifa 31021 (IL)
(72) Inventor: Mangoubi, Sami, Haifa 34608 (IL)
(74) Representative: Modiano, Micaela Nadia

(56) References cited:
- EP-A- 0 529 963
- FR-A- 1 537 215
- US-A- 4 797 683
- US-A- 5 194 985
- US-A- 5 818 631
- US-A- 6 028 699
- US-A- 6 038 065

## Description

### FIELD AND BACKGROUND OF THE INVENTION

The present invention relates to an optical window or dome assembly configured for use high at high supersonic speeds and, more particularly, to an assembly which prevents excessive heating of heat sensitive components thereof, thereby preserving the optical properties thereof at high supersonic speeds. The invention further relates to a mobile platform equipped with such an assembly.

A typical guided missile is commonly made up of a number of sections, which are housed in, or connected to a generally cylindrical housing of varying radius in the longitudinal direction.

In one type of a guided missile, at the front of the missile is the guidance section which typically includes one or more sensors, such as a Forward Looking Infrared (FLIR) or video camera, and the various electronic systems which control the sensors, analyze and interpret the signals received by the sensors, and control the flight control system which positively determines the trajectory. The guidance section may also include means for receiving signals from outside of the missile and may also include means for transmitting signals from the missile.

Behind the guidance section of the missile is the warhead which is typically a hollow cylindrically shaped casing made of high strength steel. The function of the warhead is to place an explosive charge in the appropriate position at the moment of explosion, thereby maximizing the effect of the explosion on the target. Inside the hollow casing is placed the explosive and in the rear end of the warhead lies the ignition fuse which is designed to be set off at the proper moment, typically, at some pre-determined time after the warhead encounters the target. The warhead is typically made of three sections (i) a front section, or nose, which is usually in the shape of an ogive or cone; (ii) the main section which includes the explosive charge and is usually cylindrical; and (iii) the aft section which seals the explosive charge within the casing and holds the fuse.

Behind the warhead typically lies the engine which provides thrust to the missile.

Housed in and connected to the housing at the rear of the missile, and in some cases also in other locations along the missile housing, is the flight control section, including fins and foils, which are used to adjust and stabilize the trajectory of the missile during its flight to the target.

There is often a necessity for a missile or rocket to fly at high supersonic speeds. Such a necessity may arise for a number of reasons. For example, a missile fired at a moving airplane, whether from another airplane or from a fixed position on the ground, must travel at a speed greater than that of the target airplane. The distance between the launch point and the target airplane at the time of launch, together with the speed of the target airplane will determine the speed at which the missile must travel. Since modem warplanes typically fly at speeds in excess of Mach 1, there is a need for missiles which fly at far greater speeds, for example Mach 4 or Mach 5. Additionally, missiles fired at stationary targets which are heavily defended by antimissile defense systems are most likely to reach the target if they fly at high supersonic speeds because this minimizes the time between detection and impact during which defensive measures may be taken.

Navigation of a guided missile to target must be conducted exclusively by a guidance system. One or more guidance systems are generally employed. Radar is one such guidance system. Radar is effective, but is subject to interference, both intentional interference deployed as defense mechanism, and accidental interference resulting from environmental conditions. Therefore, radar is often employed in conjunction with optical or electro-optital guidance systems, either of which may operate in the visible or infrared portion of the spectrum. These guidance systems are composed of a sensor or a detection system (e.g., electro-optical camera), and an analyzing system. The detection system must be onboard, although the analyzing system may be located outside the missile, for example at a base on the ground or in a platform such as an airplane which launched the missile, which communicates with the missile during flight. Alternatively, both the detection system and the analyzing system are carried on-board. This alternative, referred to as a "launch and forget" guidance system, is especially desirable in the case of missiles flying at high supersonic speeds where the time available for navigation decisions is extremely short, making communication with a remote location a practical impossibility.

The detection system must have a sensor in communication with the environment. At the same time, the sensor must be protected from the environment. For optical or electro-optical guidance systems this protection typically takes the form of an optical window or dome. These windows or domes are transparent to transmissions in a chosen range of wavelengths, while being opaque to transmissions with a wavelength outside that range. These optical windows or domes are typically coated with a shielding material which gives the window or dome the desired optical properties. As explained by D. Harris in "Materials for Infrared Windows and Domes (SPIE Optical Engineering Press, 1948) most common approaches to shielding include coating the optical window with an electrically conductive layer, covering the window with a metallic mesh, or increasing the conductivity of the material forming the window. In general, the thin electrically conductive coatings applied to the window are transparent at visible and/or infrared frequencies, but opaque to microwaves and radio waves. This makes such coatings useful in shielding sensitive electro-optical detectors against harmful electromagnetic interference (Kohin et al., SPIE Crit. Rev. CR39: 3-34(1992)). The shielding capabilities of these materials stems from their ability to reflect and/or absorb incident radiation. In general, the greater the conductivity of the coating material, the more effective the shielding. Common coating materials are described in, for example, (i) Pollicori and Colton, Thin Solid Films 209: 109-115 (1992); (ii) Rudisill et al., Appl. Opt. 13: 2075-2080 (1974) and (iii) Bui and Hassan, Proc. SPIE 3060:2-10 (1997).

Since the conductivity of these materials decreases with increasing temperature, they lose their shielding effectiveness when they are heated. At the same time, transmission of desired wavelengths through the shield is often diminished by heating.

Unfortunately, at high supersonic speeds (e.g., several mach), friction from the air causes heating of the optical window or dome, changing the conductivity of the coating and altering the optical properties thereof. This results in incapacitation of the detection system, either because transmissions in the chosen range of wavelengths no longer pass through the window or dome, or because interference (transmissions with a wavelength outside the chosen range) is allowed to pass through the window or dome.

There is thus a widely recognized need for, and it would be highly advantageous to have, an optical window or dome assembly which would be useable at high supersonic speeds without significant alterations in optical properties.

### SUMMARY OF THE INVENTION

According to the present invention there is provided an optical window assembly including: an outer window; (b) an inner window; and (o) a housing, wherein the outer window and the inner window are mounted, the housing holding the outer window and the inner window apart, thereby forming an intervening space between the outer window and the inner window; wherein the outer window includes an outer surface facing away from the inner window and an inner surface facing towards the inner window, wherein the inner window includes an outer surface facing towards the outer window and an inner surface facing away from the outer window, characterized in that only the inner surface of the inner window is coated with an optical coating that is substantially transparent in at least one wavelength band selected from the group consisting of visible wavelength bands and infrared wavelength bands and that is substantially opaque to electromagnetic radiation of radio and radar frequencies. According to the present invention there is provided an electro-optical detection system including: (a) an electro-optical payload; and (b) an optical window assembly, for passing, to the electro-optical payload, electromagnetic radiation in at least one wavelength band selected from the group consisting of visible wavelength bands and infrared wavelength bands, while blocking electromagnetic radiation of radio and radar frequencies, the optical window assembly including: (i) an outer window, (ii) an inner window, and (iii) a housing, wherein the outer window and the inner window are mounted, the housing holding the outer window and the inner window apart, thereby forming an intervening space between the outer window and the inner window; wherein the outer window includes an outer surface facing away from the inner window and an inner surface facing towards the inner window, wherein the inner window includes an outer surface facing towards the outer window an an inner surface facing away from the outer window, characterized in that only the inner surface of the inner window is coated with an optical coating that is substantially transparent in at least one of the wavelength bands and that is substantially opaque to the electromagnetic radiation of radio and radar frequencies.

According to the present invention there is provided a mobile platform including: (a) an electro-optical detection system including: (i) an optical window assembly, for admitting to the mobile platform electromagnetic radiation in at least one wavelength band selected from the group consisting of visible wavelength bands and infrared wavelength bands, while blocking electromagnetic radiation of radio and radar frequencies, the optical window assembly including: (A) an outer window, (B) an inner window, and (C) a housing, wherein the outer window and the inner window are mounted, the housing holding the outer window and the inner window apart, thereby forming an intervening space between the outer window and the inner window, wherein the outer window includes an outer surface facing away from the inner window and an inner surface facing towards the inner window, wherein the inner window includes an outer surface facing towards the outer window and an inner surface facing away from the outer window, characterized in that only the inner surface of the inner window is coated with an optical coating that is substantially transparent in at least one of the wavelength bands and that is substantially opaque to the electromagnetic radiation of radio and radar frequencies. According to the present invention there is provided a method of detecting, from within a platform moving at a supersonic speed, electromagnetic radiation in at least one wavelength band selected from the group consisting of visible wavelength bands and infrared wavelength bands, including the steps of: (a) providing the platform with an inner window that is transparent in the at least one wavelength band; and (b) thermally insulating the inner window, from an atmosphere external to the platform, in a manner that allows the electromagnetic radiation to reach inner window, by steps including incorporating the inner window in an optical window assembly that also includes:(i) an outer window between the external atmosphere and the inner window, and (ii) a housing, wherein the outer window and the inner window are mounted, the housing holding the outer window and the inner window apart, thereby forming an intervening space between the outer window and the inner window; wherein the outer window includes an outer surface facing towards the external atmosphere and an inner surface facing towards the inner window, wherein the inner window includes an outer surface facing towards the outer window and an inner surface facing away from the outer window, characterized in that only the inner surface of the inner window is coated with an optical coating that is substantially transparent in the at least one wavelength band and that is substantially opaque to electromagnetic radiation of radio and radar frequencies.

The optical window assembly of the present invention includes two windows, 10 an outer window and an inner window, held apart, and thereby defining an intervening space between the two windows, by being mounted in a housing. Some or all of the windows are coated with a heat-resistant anti-reflection coating. The inner surface of the inner window is coated with an electrically conductive optical coating that passes selected visible and/or infrared bands while blocking electromagnetic interference at radio and/or radar frequencies.

As used herein the term "electrically conductive" means having a surface resistivity of less than about 50 Ω square, preferably less than about 25 Ω square, and most preferably less than about 5Ω square. As used herein, the term "heat resistant" means that during the supersonic flight of the platform, the optical transmission of the anti-reflective coating degrades by no more than about 25%. Preferably, the optical transmission of the anti-reflective coating degrades by no more than about 10%. Most preferably, the optical transmission of the anti-reflective coating does not degrade to any perceptible degree.

Preferably, the inner surface of the inner window, i.e., the surface of the inner window that faces away from the outer window, is coated with the optical coating, and the remaining surfaces are coated with the anti-reflection coating. Preferred materials of the optical coating include doped semiconductors such as doped gallium arsenide and doped germanium.

The primary insulation of the inner window from the heat of the external environment is provided by the intervening space between the two windows. This intervening space preferably is occupied either by vacuum or by a thermally insulating substance. Alternatively, a cooling fluid is circulated through the intervening space to actively cool the inner window.

The windows may be either curved or planar, to conform with the shape of the platform wherein the window assembly is mounted.

Double-paned window assemblies similar to the window assembly of the present invention are taught in the prior art, for example by Borden in US Patent No. 6,038,065 which forms a basis for the preamble of independent claims 1, 13, 18 and 23. Window coatings that block radio and radar also are taught in the prior art, for example by Hilton, Sr. in US Patent No. 5,194,985; but these coatings are on the outward-facing surfaces of the windows. The present invention places the coating for blocking radio and radar only on the inner surface of the inner window, where that coating is best protected from external disturbances such as frictional heating.

An electro-optical payload of the present invention includes, in addition to the optical window assembly of the present invention, an electro-optical payload that includes an array of photosensitive elements and a focusing component for focusing, onto the array of photosensitive elements, visible and/or infrared light, in the selected bands, that enters the platform via the window assembly. The payload may also include a mechanism for circulating a cooling fluid through the intervening space of the window assembly.

In a mobile platform of the present invention, the electro-optical detection system is mounted with the outer surface of the outer window flush with the fuselage of the platform. The mobile platform also includes a mechanism for propelling the platform at supersonic speed.

The present invention also includes within its scope a method for detecting external visible and/or infrared radiation from within a moving platform, while that platform moves supersonically. The platform is provided with a window that admits the visible and/or infrared radiation while blocking electromagnetic interference at radio and/or radar frequencies. This window is thermally insulated from the external atmosphere in a manner that allows the desired visible and/or infrared radiation to reach the inner window. Preferably, this insulating is accomplished by making this window the inner window of the optical window assembly of the present invention.

The present invention successfully addresses the shortcomings of the presently known configurations by providing an optical window or dome assembly configured for use at high supersonic speeds and suited for use as part of an electro optical detection system, for example, an electro optical detection system serving as part of a guidance system of a missile or similar platform.

### BRIEF DESCRIPTION OF THE DRAWINGS

The invention is herein described, by way of example only, with reference to the accompanying drawings, wherein:
FIGs. 1A and 1B are cross sectional views of an optical window assembly and an optical dome assembly, respectively, of the present invention;
FIG. 2 is a detailed cross sectional view of the optical window assembly of FIG. 1A showing application of coatings to surfaces thereof;
FIG. 3 is a schematic side view of a missile according to the present invention;
FIG. 4 is a schematic illustration of an electro-optical detection system mounted in the missile of FIG. 3.

### DESCRIPTION OF THE PREFERRED EMBODIMENTS

The present invention is of an optical window or dome assembly which can be used at high supersonic speeds. Specifically, the present invention can be used to prevent excessive heating of heat sensitive components of the assembly, thereby preserving the optical properties thereof at high supersonic speeds. The invention is further of a mobile platform, such as a guided missile, containing the assembly, of an electro-optical detection system containing the assembly, and of a method, of detecting electromagnetic radiation from within a platform moving at supersonic speed, that uses the assembly.

For purposes of this specification and the accompanying claims, the term "platform" refers to any manned or unmanned vehicle, or any portion thereof, that carries a payload that must receive visible or infrared radiation from its external environment. In the description below, the predominant example of such a platform is a missile. In the present context, "missile" refers to any launchable projectile, but not limited to a launchable projectile carrying an explosive charge. Included in the definition are both self-propelled missiles and those which move primarily due to an initial force applied at launch. This definition specifically includes "rockets" as a lay person commonly uses that term. Missiles referred to herein have as their primary, but not exclusive, purpose homing in on a target, contacting the target and damaging, or more preferably destroying, the target. To this end, missiles are typically equipped with a guidance system, as described hereinabove, and a navigation system capable of adjusting a flight trajectory of the missile so that it accurately impacts the target.

Nevertheless, the scope of the term "platform", as used herein, also includes other mobile vehicles, or portions thereof, that are required to receive visible or infrared radiation from their external environments. In particular, the scope of the term "platform", as used herein, includes an external pod attached to a manned aircraft, for example by being suspended from the wing of the manned aircraft. The scope of the term "platform", as used herein, also includes a drone that is tethered to and towed behind a manned or unmanned aircraft.

The principles and operation of a an optical window or dome assembly according to the present invention may be better understood with reference to the drawings and accompanying descriptions.

Before explaining at least one embodiment of the invention in detail, it is to be understood that the invention is not limited in its application to the details of construction and the arrangement of the components set forth in the following description or illustrated in the drawings. The invention is capable of other embodiments or of being practiced or carried out in various ways. Also, it is to be understood that the phraseology and terminology employed herein is for the purpose of description and should not be regarded as limiting.

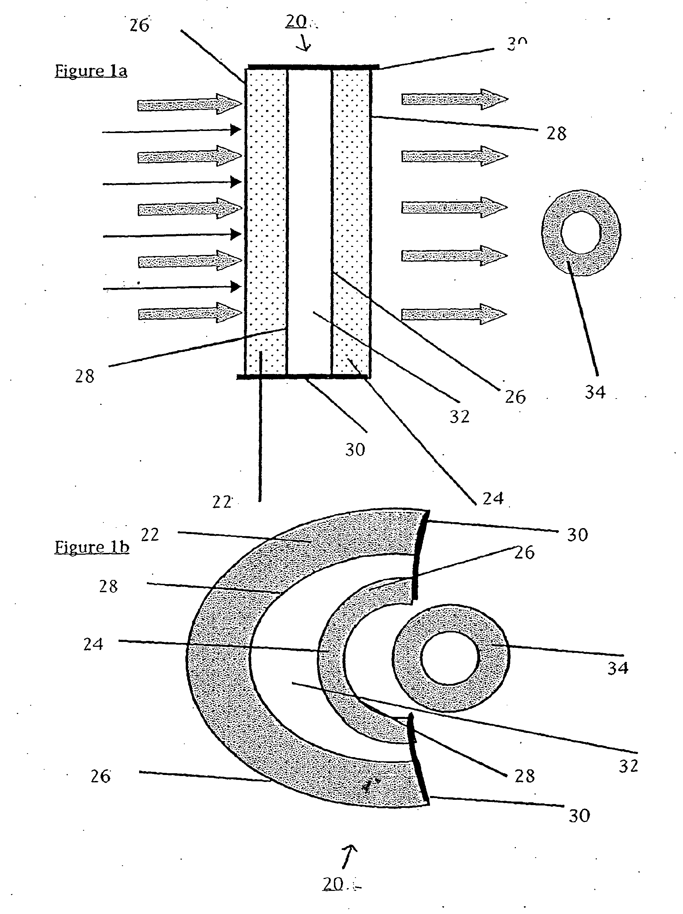

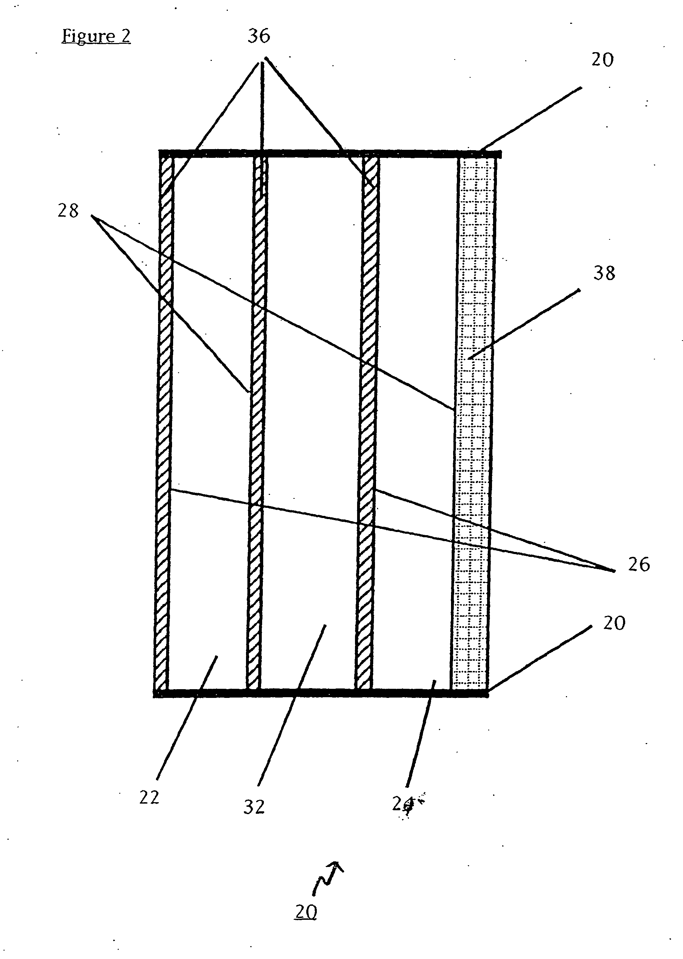

Figures 1A and 1B and 2 show cross sectional views of an optical window or dome assembly **20** adapted for operation at high supersonic speeds in accordance with the teachings of the present invention. Assembly **20** includes a housing **30.** Assembly **20** further includes an outer window or dome **22,** an inner window or dome **24** an intervening space **32** formed between outer window or dome **22** and inner window or dome **24.** Housing **30** holds inner window or dome **24** and outer window or dome **22** and helps define intervening space **32**. Inner window or dome **24** and outer window or dome **22** each have an outer surface **26** and an inner surface **28.** Outer surface **26** of outer window or dome **22** contacts an external atmosphere while assembly **20** travels at high supersonic speeds. Inner surface **28** of outer window or dome **22** outer surface **26** of inner window or dome **24** contact intervening space **32,** such that they do not contact an external atmosphere. Outer surface **26** of inner window or dome **24** is therefore shielded from contact with the external atmosphere by outer window or dome **22** towards which it faces. Inner surface **28** of inner window or dome **24** faces away from the outer window or dome, contacting neither intervening space **32** nor the external atmosphere. This physical shielding protects inner dome or window **24** from excessive heating, for example heating caused by friction with the external atmosphere when traveling at high supersonic speeds.

In order to provide protection from excessive heating for inner dome or window **24,** intervening space **32** is filled by a material characterized by high thermal insulation properties, for example, a gas at atmospheric pressure or a gas at sub-atmospheric pressure. The gas may, for example, be air. Alternatively, a cooling fluid is circulated through intervening space **32.**

In order to increase the functionality of inner window or dome **24,** it is coated with an optical coating **38** on its inner surface **28.** Optical coating **38** is selected to be substantially transparent to radiation at the visible and/or the infrared portion of the electromagnetic spectrum and substantially opaque to radiation at the radio frequency and/or radar frequency portion of the electromagnetic spectrum.

For purposes of this specification and the accompanying claims, the term "excessive heating" is defined as the degree of heating which will interfere with function of an optical coating **38** (as set forth hereinbelow) for example by altering an electrical conductivity thereof or by changing the degree to which the coating absorbs or reflects transmissions of a specific wavelength.

For purposes of this specification and the accompanying claims, the term "conductivity" refers to electrical conductivity.

For purposes of this specification and the accompanying claims, the phrase "substantially transparent" is defined as permitting at least 75%, more preferably at least 85 %, more preferably at least 95 %, more preferably at least 99 %, most preferably approximately 100% transmission of radiation of a specified wavelength.

For purposes of this specification and the accompanying claims, the phrase "visible portion of the electromagnetic spectrum" is defined as the portion of the electromagnetic spectrum with wavelengths between 0.4 microns and 0.8 microns. The most useful band within this portion of the electromagnetic spectrum is the band with wavelengths between 0.4 microns and 0.7 microns.

For purposes of this specification and the accompanying claims, the phrase "infrared portion of the electromagnetic spectrum" is defined as the portion of the electromagnetic spectrum with wavelengths between 0.8 microns and 100 microns. Particularly useful bands within this portion of the electromagnetic spectrum include the band with wavelengths between 3 and 5 microns and the band with wavelengths between 8 and 14 microns.

For purposes of this specification and the accompanying claims, the phrase "substantially opaque" is defined as absorbing at least 75% of the incident radiation in a specified wavelength band.

For purposes of this specification and the accompanying claims, the term "radio frequency" is defined as frequencies between 10 KHz and 300 GHz.

Optical coating **38** is typically characterized by high conductivity and may be, for example, a doped Gallium Arsenide coat or a doped Germanium coat.

Assembly **20** may employ additional, anti-reflective coating **36** applied over one or more, preferably all of the remaining surfaces of inner **24** and/or outer **22** windows or domes of assembly **20.** Coating **36** functions to decrease the degree to which windows or domes **22** and/or **24** reflect or refract incident radiation, thereby increasing the amount of desired radiation which arrives at an electro-optical payload **34.** Coating **36** is preferably selected heat resistant.

In some cases, assembly **20** includes inner window or dome **24** and outer window or dome **22** which are both planar windows as in Figure 1A. In other cases assembly **20** includes inner window or dome **24** and outer window or dome **22** which are both domes, i.e., curved windows as in Figure 1B.

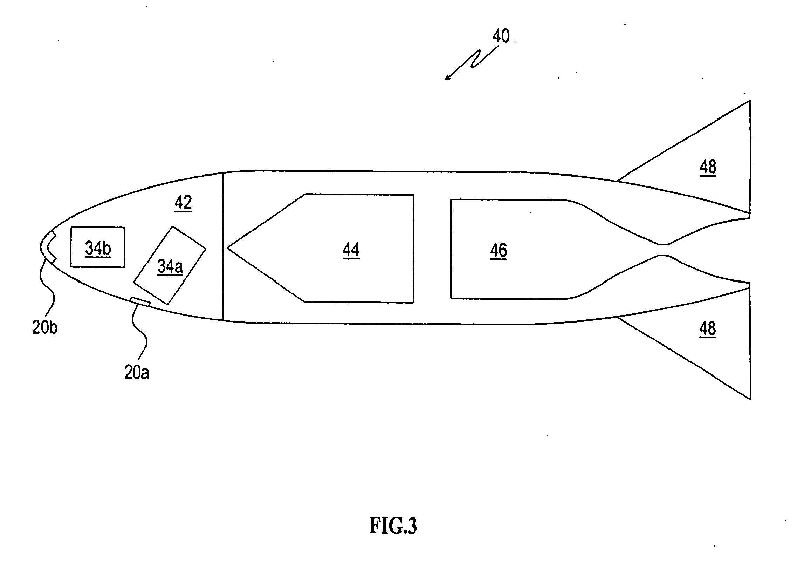

Assembly **20** is designed for use in a missile **40** (Figure 3). Missile **40** is of the type discussed under "field and background", and includes a guidance section **42,** a warhead **44,** a propulsion system **46** and one or more flight control surfaces **48** (pictured as fins). Window assembly **20a** or dome assembly **20b** is typically installed in guidance section **42** of missile **40** rendering it ready for operation at high supersonic speeds. Assembly **20** serves as part of an electro-optical detection system of missile **40,** the remainder of the electro-optical detection system being electro-optical payload **34.** In the particular example illustrated, electro-optical payload **34a** receives visible and infrared radiation from outside of missile **40** via window assembly **20a** and electro-optical payload **34b** receives visible and infrared radiation from outside of missile **40** via window assembly **20b.**

Propulsion system 46 is an example of a mechanism for propelling an independently moving platform of the present invention, such as missile **40,** at supersonic speed. In the case of a platform, such as a wing pod, that is attached or tethered to a mother vehicle, the mother vehicle propels the platform at supersonic speed.

The present invention is further embodied by a method of preventing excessive heating of optical coating **38,** while operating at high supersonic speeds, where optical coating **38** is selected to be substantially transparent to radiation at the visible and/or the infrared portion of the electromagnetic spectrum and substantially opaque to radiation at the radio frequency and/or radar frequency portion of the electromagnetic spectrum. The method according to this aspect of the present invention is effected by: (a) providing assembly **20** which includes: (i) housing **30;** (ii) outer window or dome **22** in contact with an external atmosphere and featuring outer surface **26** and inner surface **28**, outer surface **26** of the outer window or dome **22** facing the external atmosphere, inner surface **28** of the outer window or dome **22** facing away from the external atmosphere; (iii) inner window or dome **24** being held by housing **30** and being shielded from contact with the external atmosphere by outer window or dome **22,** inner window or dome **24** featuring outer surface **26** and inner surface **28,** outer surface **26** of inner window or dome **24** facing outer window or dome **22,** inner surface **28** of inner window or dome **24** facing away from outer window or dome **22;** and (iv) intervening space **32** formed between outer window or dome **22** and inner window or dome **24;** and (b) applying optical coating **38** on one of the outer surface **26** and the inner surface **28** of the inner window or dome **24,** thereby preventing excessive heating of optical coating **38** while operating at the high supersonic speeds.

According to still another aspect of the present invention there is provided an electro-optical detection system comprising assembly **20** and an electro-optical payload.

When assembly **20,** as part of an electro-optical detection system, is installed in missile **40** which is in use at high supersonic speed, incident radiation impacts outer surface **26** of outer window **22** (black arrows and stippled arrows; Figure 1A). Interference radiation (black arrows) is blocked by optical coating **38,** while visible and/or infrared radiation (stippled arrows) passes through optical coating **38** of inner window **24.** This radiation impacts upon the electro-optical payload where it is used by the guidance system to make navigation decisions which allow missile **40** to home in on the target.

For purposes of this specification and the accompanying claims, the term "electro-optical payload" refers to an assembly which includes at least a focusing component and an array of photosensitive elements, e.g., a charge coupled device (CCD). The focusing component may include, for example, lenses, reflectors, beam splitters, mirrors, and prisms arranged or configured to direct and focus incident radiation to the array of photosensitive elements. The array of photosensitive elements absorbs incident radiation in the form of photons and generates an electrical output, the strength thereof corresponding to the number of photons absorbed. The CCD proportionally transforms the incoming photon signal to an electrical signal.

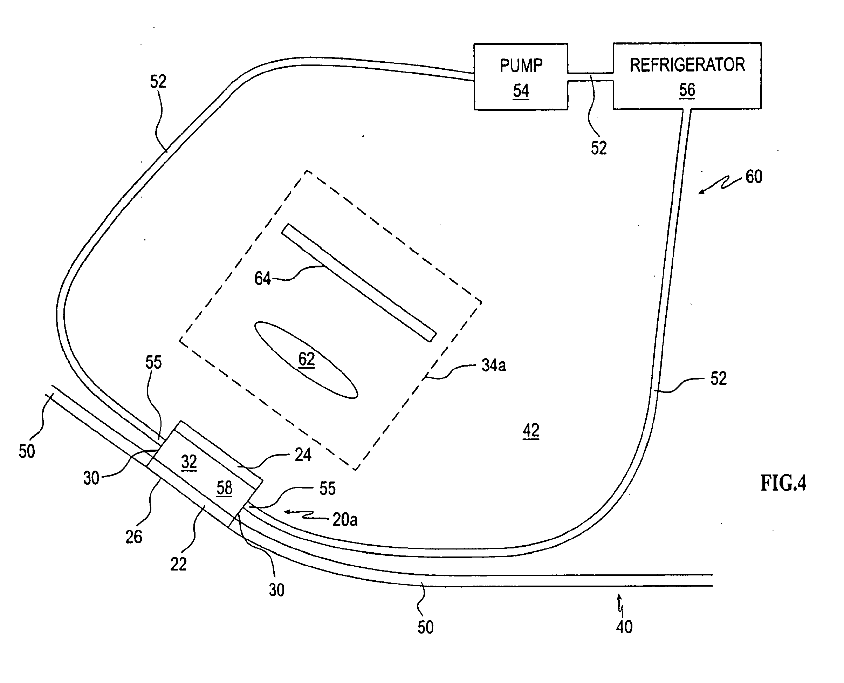

Figure 4 shows, schematically, an electro-optical detection system **60** of the present invention, including window assembly **20a** and installed within guidance section **42** of missile **40.** As noted above, electro-optical detection system **60** includes both window assembly **20a** and electro-optical payload **34a.** Electro-optical payload **34a** includes a focusing component **62,** represented symbolically as a convex lens, and an array **64** of photosensitive elements. Visible and/or infrared radiation entering missile **40** via window assembly **20a** is focused by focusing component **62** onto array **64.** Note that outer surface **26** of outer window **22** of window assembly **20a** is flush with fuselage **50** of missile **40.** Electro-optical detection system **60** also includes a mechanism for circulating a fluid coolant **58** through intervening space **32** of window assembly **20a.** Specifically, tubing **52** connects intervening space **32** of window assembly **20a,** via ports **55** in housing **30** of window assembly **20a,** to a refrigerator **56** and a pump **54.** Pump **54** circulates coolant **58** through intervening space **32,** and refrigerator **56** cools hot coolant **58** arriving from window assembly **20a.**

Although the invention has been described in conjunction with specific embodiments thereof, it is evident that many alternatives, modifications and variations will be apparent to those skilled in the art. Accordingly, it is intended to embrace all such alternatives, modifications and variations that fall within the broad scope of the appended claims.

Citation or identification of any reference in this section or in any other section of this application shall not be construed as an admission that such reference is available as prior art to the present invention.
Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. An optical window assembly (20) comprising:
(a) an outer window (22);
(b) an inner window (24); and
(c) a housing (30), wherein said outer window (22) and said inner window (24) are mounted, said housing (30) holding said outer window (22) and said inner window (24) apart, thereby forming an intervening space (32) between said outer window (22) and said inner window (24);
wherein said outer window (22) includes an outer surface (26) facing away from said inner window (24) and an inner surface (28) facing towards said inner window (24), wherein said inner window (24) includes an outer surface (26) facing towards said outer window (22) and an inner surface (28) facing away from said outer window (22), **characterized in that** only said inner surface (28) of said inner window (24) is coated with an optical coating (38) that is substantially transparent in at least one wavelength band selected from the group consisting of visible wavelength bands and infrared wavelength bands and that is substantially opaque to electromagnetic radiation of radio and radar frequencies.

2. The optical window assembly (20) of claim 1, wherein said optical coating (38) is electrically conductive.

3. The optical window assembly (20) of claim 1, wherein said optical coating (38) includes at least one material selected from the group consisting of doped gallium arsenide and doped germanium.

4. The optical window assembly (20) of claim 1, wherein at least one of said surfaces (26, 28) is coated with an anti-reflective coating (36).

5. The optical window assembly (20) of claim 4, wherein said outer surface (26) of said outer window (22), said inner surface (28) of said outer window (22) and said outer surface (26) of said inner window (24) are coated with said anti-reflective coating (36).

6. The optical window assembly (20) of claim 4, wherein said anti-reflective coating (36) is heat resistant.

7. The optical window assembly (20) of claim 1, wherein said intervening space (32) is occupied by a vacuum.

8. The optical window assembly (20) of claim 1, wherein said intervening space (32) is occupied by a thermally insulating substance.

9. The optical window assembly (20) of claim 8, wherein said thermally insulating substance is a gas.

10. The optical window assembly (20) of claim 1, wherein said intervening space (32) is occupied by a coolant (58).

11. The optical window assembly (20) of claim 1, wherein said windows (22, 24) are planar.

12. The optical window assembly (20) of claim 1, wherein said windows (22, 24) are curved.

13. An electro-optical detection system (60) comprising:
(a) an electro-optical payload (34); and
(b) an optical window assembly (20), for passing, to said electro-optical payload (34), electromagnetic radiation in at least one wavelength band selected from the group consisting of visible wavelength bands and infrared wavelength bands, while blocking electromagnetic radiation of radio and radar frequencies, said optical window assembly (20) including:
(i) an outer window (22),
(ii) an inner window (24), and
(iii) a housing (30), wherein said outer window (22) and said inner window (24) are mounted, said housing (30) holding said outer window (22) and said inner window (24) apart, thereby forming an intervening space (32) between said outer window (22) and said inner window (24);
wherein said outer window (22) includes an outer surface (26) facing away from said inner window (24) and an inner surface (28) facing towards said inner window (24), wherein said inner window (24) includes an outer surface (26) facing towards said outer window (22) and an inner surface (28) facing away from said outer window (22), **characterized in that** only said inner surface (28) of said inner window (24) is coated with an optical coating (38) that is substantially transparent in at least one of said wavelength bands and that is substantially opaque to said electromagnetic radiation of radio and radar frequencies.

14. The electro-optical detection system (60) of claim 13, wherein said intervening space (32) is occupied by a vacuum.

15. The electro-optical detection system (60) of claim 13, wherein said intervening space (32) is occupied by a thermally insulating substance.

16. The electro-optical detection system (60) of claim 13, wherein said intervening space (32) is occupied by a coolant (58), the electro-optical detection system (60) further comprising:
(c) a mechanism (54) for circulating said coolant (58) through said intervening space (32).

17. The electro-optical detection system (60) of claim 13, wherein said electro-optical payload (34) includes:
(i) an array (64) of photosensitive elements, and
(ii) a focusing component (62) for focusing said electromagnetic radiation in said at least one wavelength band onto said array (64).

18. A mobile platform (40) comprising:
(a) an electro-optical detection system (60) including:
(i) an optical window assembly (20), for admitting to the mobile platform (40) electromagnetic radiation in at least one wavelength band selected from the group consisting of visible wavelength bands and infrared wavelength bands, while blocking electromagnetic radiation of radio and radar frequencies, said optical window assembly (20) including:
(A) an outer window (22),
(B) an inner window (24), and
(C) a housing (30), wherein said outer window (22) and said inner window (24) are mounted, said housing (30) holding said outer window (22) and said inner window (24) apart, thereby forming an intervening space (32) between said outer window (22) and said inner window (24);
wherein said outer window (22) includes an outer surface (26) facing away from said inner window (24) and an inner surface (28) facing towards said inner window (24), wherein said inner window (24) includes an outer surface (26) facing towards said outer window (22) and an inner surface (28) facing away from said outer window (22), **characterized in that** only said inner surface (28) of said inner window (24) is coated with an optical coating (38) that is substantially transparent in at least one of said wavelength bands and that is substantially opaque to said electromagnetic radiation of radio and radar frequencies.

19. The mobile platform (40) of claim 18, wherein said electro-optical detection system (60) further includes:
(ii) an electro-optical payload (34) for receiving said electromagnetic radiation in said at least one wavelength band.

20. The mobile platform(40) of claim 19, wherein said electro-optical payload (34) includes:
(A) an array (64) of photo sensitive elements, and
(B) a focusing component (62) for focusing said electromagnetic radiation in said at least one wavelength band onto said array (64).

21. The mobile platform (40) of claim 18, further comprising:
(b) a fuselage;
and wherein said outer surface (26) of said outer window (22) is substantially flush with said fuselage.

22. The mobile platform (40) of claim 18, further comprising:
(b) a mechanism (46) for propelling the platform (40) at a supersonic speed.

23. A method of detecting, from within a platform (40) moving at a supersonic speed, electromagnetic radiation in at least one wavelength band selected from the group consisting of visible wavelength bands and infrared wavelength bands, comprising the steps of:
(a) providing the platform (40) with an inner window (24) that is transparent in the at least one wavelength band; and
(b) thermally insulating said inner window (24), from an atmosphere external to the platform (40), in a manner that allows the electromagnetic radiation to reach said inner window (24), by steps including incorporating said inner window (24) in an optical window assembly (20) that also includes:
(i) an outer window (22) between said external atmosphere and said inner window (24), and
(ii) a housing (30), wherein said outer window (22) and said inner window (24) are mounted, said housing (30) holding said outer window (22) and said inner window (24) apart, thereby forming an intervening space (32) between said outer window (22) and said inner window (24);
wherein said outer window (22) includes an outer surface (26) facing towards said external atmosphere and an inner surface (28) facing towards said inner window (24), wherein said inner window (24) includes an outer surface (26) facing towards said outer window (22) and an inner surface (28) facing away from said outer window (22), **characterized in that** only said inner surface (28) of said inner window (24) is coated with an optical coating (38) that is substantially transparent in the at least one wavelength band and that is substantially opaque to electromagnetic radiation of radio and radar frequencies.

24. The method of claim 23, wherein said insulating is effected by steps further including providing a vacuum in said intervening space (32).

25. The method of claim 23. wherein said insulating is effected by steps further including providing a thermally insulating substance in said intervening space (32).

26. The method of claim 23, wherein said insulating is effected by steps further including circulating a coolant (58) through said intervening space (32).

## Patentansprüche

1. Ein optischer Fensteraufbau (20), der folgendes umfasst:
(a) ein Außenfenster (22);
(b) ein Innenfenster (24); und
(c) ein Gehäuse (30), in das das Außenfenster (22) und das Innenfenster (24) montiert sind, wobei das Gehäuse (30) das Außenfenster (22) und das Innenfenster (24) getrennt hält, wodurch ein Zwischenraum (32) zwischen dem Außenfenster (22) und dem Innenfenster (24) gebildet wird;
worin das Außenfenster (22) eine Außenfläche (26) einschließt, die vom Innenfenster (24) weg zeigt, und eine Innenfläche (28) einschließt, die in Richtung des Innenfensters (24) zeigt, worin das Innenfenster (24) eine Außenfläche (26) einschließt, die in Richtung des Außenfensters (22) zeigt, und eine Innenfläche (28) einschließt, die von dem Außenfenster (22) weg zeigt,
**dadurch gekennzeichnet, dass**
nur die Innenfläche (28) des Innenfensters (24) mit einer optischen Schicht (38) überzogen ist, die für mindestens ein Wellenlängenband im Wesentlichen transparent ist, das aus der Gruppe gewählt ist, die sich aus sichtbaren Wellenlängenbändern und Infrarot-Wellenlängenbändern zusammensetzt, und die gegenüber einer elektromagnetischen Strahlung von Hoch- und Radarfrequenzen im Wesentlichen opak ist.

2. Der optische Fensteraufbau (20) nach Anspruch 1, worin die optische Schicht (38) elektrisch leitend ist.

3. Der optische Fensteraufbau (20) nach Anspruch 1, worin die optische Schicht (38) mindestens ein Material einschließt, das aus der Gruppe gewählt ist, die aus dotiertem Galliumarsenid und dotiertem Germanium besteht.

4. Der optische Fensteraufbau (20) nach Anspruch 1, in dem mindestens eine der Oberflächen (26, 28) mit einer Anti-reflektierenden Schicht (36) überzogen ist.

5. Der optische Fensteraufbau (20) nach Anspruch 4, worin die Außenfläche (26) des Außenfensters (22), die Innenfläche (28) des Außenfensters (22) und die Außenfläche (26) des Innenfensters (24) mit der Anti-reflektierenden Schicht (36) überzogen sind.

6. Der optische Fensteraufbau (20) nach Anspruch 4, worin die Anti-reflektierende Schicht (36) hitzebeständig ist.

7. Der optische Fensteraufbau (20) nach Anspruch 1, worin der Zwischenraum (32) von einem Vakuum besetzt ist.

8. Der optische Fensteraufbau (20) nach Anspruch 1, worin der Zwischenraum (32) von einer thermisch isolierenden Substanz besetzt ist.

9. Der optische Fensteraufbau (20) nach Anspruch 8, worin die thermisch isolierende Substanz ein Gas ist.

10. Der optische Fensteraufbau (20) nach Anspruch 1, worin der Zwischenraum (32) von einem Kühlmittel (58) besetzt ist.

11. Der optische Fensteraufbau (20) nach Anspruch 1, worin die Fenster (22, 24) eben sind.

12. Der optische Fensteraufbau (20) nach Anspruch 1, worin die Fenster (22, 24) gebogen sind.

13. Ein elektro-optisches Erfassungssystem (60), das folgendes umfasst:
(a) eine elektro-optische Nutzlast (34); und
(b) einen optischen Fensteraufbau (20), um elektromagnetische Strahlung in mindestens einem Wellenlängenband, das aus der Gruppe gewählt ist, die aus sichtbaren Wellenlängenbändern und Infrarot-Wellenlängenbändern besteht, an die elektro-optische Nutzlast (34) zu führen, während die elektromagnetische Strahlung aus Hoch- und Radarfrequenzen gesperrt wird, wobei der optische Fensteraufbau (20) folgendes einschließt:
(i) ein Außenfenster (22),
(ii) ein Innenfenster (24), und
(iii) ein Gehäuse (30), in das das Außenfenster (22) und das Innenfenster (24) montiert sind, wobei das Gehäuse (30) das Außenfenster (22) und das Innenfenster (24) getrennt hält, wodurch ein Zwischenraum (32) zwischen dem Außenfenster (22) und dem Innenfenster (24) gebildet wird;
worin das Außenfenster (22) eine Außenfläche (26) einschließt, die vom Innenfenster (24) weg zeigt, und eine Innenfläche (28) einschließt, die in Richtung des Innenfensters (24) zeigt, worin das Innenfenster (24) eine Außenfläche (26) einschließt, die in Richtung des Außenfensters (22) zeigt, und eine Innenfläche (28) einschließt, die von dem Außenfenster (22) weg zeigt,
**dadurch gekennzeichnet, dass**
nur die Innenfläche (28) des Innenfensters (24) mit einer optischen Schicht (38) überzogen ist, die für mindestens eines der Wellenlängenbänder im Wesentlichen transparent ist und die gegenüber einer elektromagnetischen Strahlung von Hoch- und Radarfrequenzen im Wesentlichen opak ist.

14. Das elektro-optische Erfassungssystem (60) nach Anspruch 13, worin der Zwischenraum (32) von einem Vakuum besetzt ist.

15. Das elektro-optische Erfassungssystem (60) nach Anspruch 13, worin der Zwischenraum (32) von einer thermisch isolierenden Substanz besetzt ist.

16. Das elektro-optische Erfassungssystem (60) nach Anspruch 13, worin der Zwischenraum (32) von einem Kühlmittel (58) besetzt ist, wobei das elektro-optische Erfassungssystem (60) weiterhin folgendes umfasst:
(c) einen Mechanismus (54), damit das Kühlmittel (58) durch den Zwischenraum (32) zirkuliert wird.

17. Das elektro-optische Erfassungssystem (60) nach Anspruch 13, worin die elektro-optische Nutzlast (34) folgendes einschließt:
(i) eine Anordnung (64) von lichtempfindlichen Elementen; und
(ii) eine Fokussierkomponente (62), um die elektromagnetische Strahlung in dem mindestens einen Wellenlängenband auf die Anordnung (64) zu fokussieren.

18. Eine mobile Plattform (40), die folgendes umfasst:
(a) ein elektro-optisches Erfassungssystem (60), das folgendes einschließt:
(i) einen optischen Fensteraufbau (20), um an die mobile Plattform (40) eine elektromagnetische Strahlung in mindestens einem Wellenlängenband zuzulassen, das aus der Gruppe ausgewählt ist, die aus sichtbaren Wellenlängenbändern und Infrarot-Wellenlängenbändern besteht, während die elektromagnetische Strahlung aus Hoch- und Radarfrequenzen gesperrt wird, wobei der optische Fensteraufbau (20) folgends einschließt:
(A) ein Außenfenster (22),
(B) ein Innenfenster (24), und
(C) ein Gehäuse (30), in das das Außenfenster (22) und das Innenfenster (24) montiert sind, wobei das Gehäuse (30) das Außenfenster (22) und das Innenfenster (24) getrennt hält, wodurch zwischen dem Außenfenster (22) und dem Innenfenster (24) ein Zwischenraum (32) gebildet wird;
worin das Außenfenster (22) eine Außenfläche (26) einschließt, die vom Innenfenster (24) weg zeigt, und eine Innenfläche (28) einschließt, die in Richtung des Innenfensters (24) zeigt, worin das Innenfenster (24) eine Außenfläche (26) einschließt, die in Richtung des Außenfensters (22) zeigt, und eine Innenfläche (28) einschließt, die von dem Außenfenster (22) weg zeigt,
**dadurch gekennzeichnet, dass**
nur die Innenfläche (28) des Innenfensters (24) mit einer optischen Schicht (38) überzogen ist, die für mindestens eines der Wellenlängenbänder im Wesentlichen transparent ist und die gegenüber einer elektromagnetischen Strahlung von Hoch- und Radarfrequenzen im Wesentlichen opak ist.

19. Die mobile Plattform (40) nach Anspruch 18, worin das elektro-optische Erfassungssystem (60) weiterhin folgendes einschließt:
(ii) eine elektro-optische Nutzlast (34) zum Empfangen einer elektromagnetischen Strahlung in dem mindestens einen Wellenlängenband.

20. Die mobile Plattform (40) nach Anspruch 19, worin die elektro-optische Nutzlast (34) folgendes einschließt:
(A) eine Anordnung (64) von lichtempfindlichen Elementen, und
(B) eine Fokussierkomponente (62), die die elektromagnetische Strahlung in dem mindestens einen Wellenlängenband auf die Anordnung (64) fokussiert.

21. Die mobile Plattform (40) nach Anspruch 18, die weiterhin folgendes umfasst:
(b) einen Flugzeugrumpf;
und worin die Außenfläche (26) des Außenfensters (22) im Wesentlichen bündig mit dem Flugzeugrumpf ist.

22. Die mobile Plattform (40) nach Anspruch 18, die weiterhin folgendes umfasst:
(b) einen Mechanismus (46), um die Plattform (40) bei einer Überschallgeschwindigkeit vorwärtszutreiben.

23. Ein Verfahren, damit innerhalb einer Plattform (40), die sich mit einer Ultraschallgeschwindigkeit bewegt, eine elektromagnetische Strahlung in mindestens einem Wellenlängenband erfasst wird, das aus der Gruppe ausgewählt wird, die aus sichtbaren Wellenlängenbändern und Infrarot-Wellenlängenbändern besteht, das folgende Schritte umfasst:
(a) das Ausstatten der Plattform (40) mit einem Innenfenster (24), das für das mindestens eine Wellenlängenband transparent ist; und
(b) das thermische Isolieren des Innenfensters (24) von einer Atmosphäre außerhalb von der Plattform (40) auf eine Weise, die erlaubt, dass die elektromagnetische Strahlung das Innenfenster (24) erreicht, und zwar durch Schritte, die den Einbau des Innenfensters (24) in einen optischen Fensteraufbau (20) einschließen, der außerdem folgendes einschließt;
(i) ein Außenfenster (22) zwischen der Außenatmosphäre und dem Innenfenster (24), und
(ii) ein Gehäuse (30), in das das Außenfenster (22) und das Innenfenster (24) montiert sind, wobei das Gehäuse (30) das Außenfenster (22) und das Innenfenster (24) getrennt hält, wodurch zwischen dem Außenfenster (22) und dem Innenfenster (24) ein Zwischenraum (32) gebildet wird;
worin das Außenfenster (22) eine Außenfläche (26) einschließt, die in Richtung der Außenatmosphäre zeigt, und eine Innenfläche (28) einschließt, die in Richtung des Innenfensters (24) zeigt, worin das Innenfenster (24) eine Außenfläche (26) einschließt, die in Richtung des Außenfensters (22) zeigt, und eine Innenfläche (28) einschließt, die von dem Außenfenster (22) weg zeigt,
**dadurch gekennzeichnet, dass**
nur die Innenfläche (28) des Innenfensters (24) mit einer optischen Schicht (38) überzogen ist, die für das mindestens eine Wellenlängenband im Wesentlichen transparent ist und die gegenüber einer elektromagnetischen Strahlung von Hoch- und Radarfrequenzen im Wesentlichen opak ist.

24. Das Verfahren nach Anspruch 23, worin die Isolation mithilfe von Schritten durchgeführt wird, die weiterhin die Bereitstellung eines Vakuums in dem Zwischenraum (32) einschließen.

25. Das Verfahren nach Anspruch 23, worin das Isolieren mithilfe von Schritten durchgeführt wird, die das Bereitstellen einer thermisch isolierenden Substanz in dem Zwischenraum (32) einschließen.

26. Das Verfahren nach Anspruch 23, worin das Isolieren mithilfe von Schritten durchgeführt wird, die weiterhin das Zirkulieren eines Kühlmittels (58) durch den Zwischenraum (32) einschließen.

## Revendications

1. Unité de fenêtre optique (20) comprenant :
(a) une fenêtre externe (22) ;
(b) une fenêtre interne (24) ; et
(c) un logement (30), dans lequel ladite fenêtre externe (22) et ladite fenêtre interne (24) sont montées, ledit logement (30) maintenant ladite fenêtre externe (22) et ladite fenêtre interne (24) espacées, formant ainsi un espace d'intervention (32) entre ladite fenêtre externe (22) et ladite fenêtre interne (24) ;
dans laquelle ladite fenêtre externe (22) comprend une surface externe (26) en regard à distance de ladite fenêtre interne (24) et une surface interne (28) en regard vers ladite fenêtre interne (24), dans laquelle ladite fenêtre interne (24) comprend une surface externe (26) en regard vers ladite fenêtre externe (22) et une surface interne (28) en regard à distance de ladite fenêtre externe (22) **caractérisée en ce que** ladite surface interne (28) de ladite fenêtre interne (24) est revêtue avec un revêtement optique (38) qui est sensiblement transparent au moins dans une bande de longueur d'onde choisie dans le groupe consistant en les bandes de longueur d'onde visible et les bandes de longueur d'onde infrarouge et qui est sensiblement opaque à un rayonnement électromagnétique des fréquences radio et radar.

2. Unité de fenêtre optique (20) selon la revendication 1, dans laquelle ledit revêtement optique (38) est électriquement conducteur.

3. Unité de fenêtre optique (20) selon la revendication 1, dans laquelle ledit revêtement optique (38) comprend au moins un matériau choisi dans le groupe consistant en l'arséniure de gallium dopé et le germanium dopé.

4. Unité de fenêtre optique (20) selon la revendication 1, dans laquelle au moins l'une desdites surfaces (26, 28) est revêtue avec un revêtement anti-réflecteur (36).

5. Unité de fenêtre optique (20) selon la revendication 4, dans laquelle ladite surface externe (26) de ladite fenêtre externe (22), ladite surface interne (28) de ladite fenêtre externe (22) et ladite surface externe (26) de ladite fenêtre interne (24) sont revêtues avec ledit revêtement anti-réflecteur (36).

6. Unité de fenêtre optique (20) selon la revendication 4, dans laquelle ledit revêtement anti-réflecteur (36) est résistant à la chaleur.

7. Unité de fenêtre optique (20) selon la revendication 1, dans laquelle ledit espace d'intervention (32) est occupé par un vide.

8. Unité de fenêtre optique (20) selon la revendication 1, dans laquelle ledit espace d'intervention (32) est occupé par une substance thermiquement isolante.

9. Unité de fenêtre optique (20) selon la revendication 8, dans laquelle ladite substance thermiquement isolante est un gaz.

10. Unité de fenêtre optique (20) selon la revendication 1, dans laquelle ledit espace d'intervention (32) est occupé par un fluide de refroidissement (58).

11. Unité de fenêtre optique (20) selon la revendication 1, dans laquelle lesdites fenêtres (22, 24) sont planes.

12. Unité de fenêtre optique (20) selon la revendication 1, dans laquelle lesdites fenêtres (22, 24) sont incurvées.

13. Système de détection électro-optique (60) comprenant :
(a) une charge utile électro-optique (34) ; et
(b) une unité de fenêtre optique (20), destinée à faire passer, à travers ladite charge utile électro-optique (34), un rayonnement électromagnétique dans au moins une bande de longueur d'onde choisie dans le groupe consistant en les bandes de longueur d'onde visible et les bandes de longueur d'onde infrarouge, tout en bloquant un rayonnement électromagnétique des fréquences radio et radar, ladite unité de fenêtre optique (20) comprenant :
(i) une fenêtre externe (22) ;
(ii) une fenêtre interne (24) ; et
(iii) un logement (30), dans lequel ladite fenêtre externe (22) et ladite fenêtre interne (24) sont montées, ledit logement (30) maintenant ladite fenêtre externe (22) et ladite fenêtre interne (24) espacées, formant ainsi un espace d'intervention (32) entre ladite fenêtre externe (22) et ladite fenêtre interne (24) ;
dans laquelle ladite fenêtre externe (22) comprend une surface externe (26) en regard à distance de ladite fenêtre interne (24) et une surface interne (28) en regard vers ladite fenêtre interne (24), dans laquelle ladite fenêtre interne (24) comprend une surface externe (26) en regard vers ladite fenêtre externe (22) et une surface interne (28) en regard à distance de ladite fenêtre externe (22) **caractérisée en ce que** ladite surface interne (28) de ladite fenêtre interne (24) est revêtue avec un revêtement optique (38) qui est sensiblement transparent au moins dans l'une desdites bandes de longueur d'onde et qui est sensiblement opaque à un rayonnement électromagnétique des fréquences radio et radar.

14. Système de détection électro-optique (60) selon la revendication 13, dans lequel ledit espace d'intervention (32) est occupé par un vide.

15. Système de détection électro-optique (60) selon la revendication 13, dans lequel ledit espace d'intervention (32) est occupé par une substance thermiquement isolante.

16. Système de détection électro-optique (60) selon la revendication 13, dans lequel ledit espace d'intervention (32) est occupé par un fluide de refroidissement (58), le système de détection électro-optique (60) comprenant en outre :
(c) un mécanisme (54) destiné à faire circuler ledit fluide de refroidissement (58) à travers ledit espace d'intervention (32).

17. Système de détection électro-optique (60) selon la revendication 13, dans lequel ladite charge utile électro-optique (34) comprend :
(i) un réseau (64) d'éléments photosensibles, et
(ii) un composant de focalisation (62) destiné à focaliser ledit rayonnement électromagnétique dans ladite au moins une bande de longueur d'onde sur ledit réseau (64).

18. Plateforme mobile (40) comprenant :
(a) un système de détection électro-optique (60) comprenant :
(i) une unité de fenêtre optique (20), destinée à faire admettre vers la plateforme mobile (40) un rayonnement électromagnétique dans au moins une bande de longueur d'onde choisie dans le groupe consistant en les bandes de longueur d'onde visible et les bandes de longueur d'onde infrarouge, tout en bloquant un rayonnement électromagnétique des fréquences radio et radar, ladite unité de fenêtre optique (20) comprenant :
(A) une fenêtre externe (22) ;
(B) une fenêtre interne (24) ; et
(C) un logement (30), dans lequel ladite fenêtre externe (22) et ladite fenêtre interne (24) sont montées, ledit logement (30) maintenant ladite fenêtre externe (22) et ladite fenêtre interne (24) espacées, formant ainsi un espace d'intervention (32) entre ladite fenêtre externe (22) et ladite fenêtre interne (24) ;
dans laquelle ladite fenêtre externe (22) comprend une surface externe (26) en regard à distance de ladite fenêtre interne (24) et une surface interne (28) en regard vers ladite fenêtre interne (24), dans laquelle ladite fenêtre interne (24) comprend une surface externe (26) en regard vers ladite fenêtre externe (22) et une surface interne (28) en regard à distance de ladite fenêtre externe (22) **caractérisée en ce que** ladite surface interne (28) de ladite fenêtre interne (24) est revêtue avec un revêtement optique (38) qui est sensiblement transparent au moins dans une desdites bandes de longueur d'onde et qui est sensiblement opaque à un rayonnement électromagnétique des fréquences radio et radar.

19. Plateforme mobile (40) selon la revendication 18, dans laquelle ledit système de détection électro-optique (60) comprend en outre :
(ii) une charge utile électro-optique (34) destinée à recevoir ledit rayonnement électromagnétique dans ladite au moins une bande de longueur d'onde.

20. Plateforme mobile (40) selon la revendication 19, dans laquelle ladite charge utile électro-optique (34) comprend :
(A) un réseau (64) d'éléments photosensibles, et
(B) un composant de focalisation (62) destiné à focaliser ledit rayonnement électromagnétique dans au moins ladite une bande de longueur d'onde sur ledit réseau (64).

21. Plateforme mobile (40) selon la revendication 18, comprenant en outre :
(b) un fuselage ;
et dans laquelle ladite surface externe (26) de ladite fenêtre externe (22) est sensiblement de niveau avec ledit fuselage.

22. Plateforme mobile (40) selon la revendication 18, comprenant en outre :
(b) un mécanisme (46) destiné à propulser la plateforme (40) à une vitesse supersonique.

23. Procédé de détection, depuis l'intérieur d'une plateforme (40) se déplaçant à une vitesse supersonique, d'un rayonnement électromagnétique dans au moins une bande de longueur d'onde choisie dans le groupe consistant en des bandes de longueur d'onde visible et des bandes de longueur d'onde infrarouge, comprenant les étapes consistant à :
(a) doter la plateforme (40) d'une fenêtre interne (24) qui est transparente dans la au moins une bande de longueur d'onde ; et
(b) isoler thermiquement ladite fenêtre interne (24), d'une atmosphère externe à la plateforme (40), d'une manière qui permet au rayonnement électromagnétique d'atteindre ladite fenêtre interne (24), par des étapes comprenant l'incorporation de ladite fenêtre interne (24) dans une unité de fenêtre optique (20) qui comprend également :
(i) une fenêtre externe (22) entre ladite atmosphère externe et ladite fenêtre interne (24), et
(ii) un logement (30), dans lequel ladite fenêtre externe (22) et ladite fenêtre interne (24) sont montées, ledit logement (30) maintenant ladite fenêtre externe (22) et ladite fenêtre interne (24) espacées, formant ainsi un espace d'intervention (32) entre ladite fenêtre externe (22) et ladite fenêtre interne (24) ;
dans laquelle ladite fenêtre externe (22) comprend une surface externe (26) en regard à distance de ladite fenêtre interne (24) et une surface interne (28) en regard vers ladite fenêtre interne (24), dans laquelle ladite fenêtre interne (24) comprend une surface externe (26) en regard vers ladite fenêtre externe (22) et une surface interne (28) en regard à distance de ladite fenêtre externe (22) **caractérisée en ce que** ladite surface interne (28) de ladite fenêtre interne (24) est revêtue avec un revêtement optique (38) qui est sensiblement transparent au moins dans une bande de longueur d'onde et qui est sensiblement opaque à un rayonnement électromagnétique des fréquences radio et radar.

24. Procédé selon la revendication 23, dans lequel ladite isolation est effectuée par des étapes comprenant en outre la fourniture d'un vide dans ledit espace d'intervention (32).

25. Procédé selon la revendication 23, dans lequel ladite isolation est effectuée par des étapes comprenant en outre la fourniture d'une substance thermiquement isolante dans ledit espace d'intervention (32).

26. Procédé selon la revendication 23, dans lequel ladite isolation est effectuée par des étapes comprenant en outre la circulation d'un fluide de refroidissement (58) à travers ledit espace d'intervention (32).
